# EUROPEAN PATENT APPLICATION

(11) **EP 4 583 489 A2**
(43) Date of publication of application: **09.07.2025**
(21) Application number: 25178346.0
(22) Date of filing: 14.01.2020
(51) Int. Cl.: H04L 67/00

(54) **ARTIFICIAL INTELLIGENCE OPERATION PROCESSING METHOD AND APPARATUS, SYSTEM, TERMINAL, AND NETWORK DEVICE**

(62) Divisional of application: 20914607.5
(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong 523860 (CN)
(74) Representative: Penza, Giancarlo

(57) **Abstract**

Disclosed are an artificial intelligence operation processing method and apparatus, a system, a terminal, and a network device. The method comprises: a terminal receives indication information sent by a network device, wherein the indication information is used for indicating information about an artificial intelligence/machine learning (AI/ML) task performed by the terminal. The present invention solves the technical problems in the related art of unsatisfactory needs and waste of resources in the local implementation of an AI/ML operation by a terminal, thereby achieving the effects of fully utilizing various resources such as computing power, storage, power supply, and communication rate of the terminal according to actual changes.

## Description

### Technical Field

The present invention relates to the communication field, in particular to an artificial intelligence operation processing method, an apparatus, a system, a terminal, and a network device.

### Background

Artificial Intelligence (AI) and Machine Learning (ML) are taking on increasing important tasks in mobile communication terminals, such as taking pictures, image identification, video chat, Augmented Reality (AR)/Virtual Reality (VR), gaming, etc. It is expected that the transmission of an AI/ML model on 5G and 6G networks will become an important service in the future.

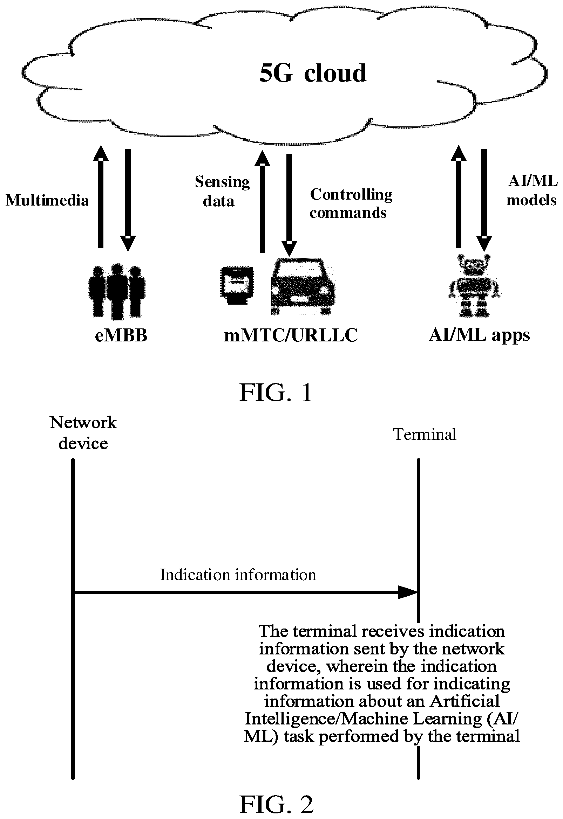

FIG. 1 is a schematic diagram of the transmission of the AI/ML model on the 5G and 6G networks in related technologies. As shown in FIG. 1, for 5G mobile terminals such as smart phones, smart cars, drones and robots, effectively applying AI/ML services faces challenges: the terminals lack the computing power, storage resources, and battery capacity required to run AI/ML operations completely locally.

For the above-mentioned challenges, a solution has been designed in 3GPP, that is, offloading all AI/ML operations to 5G clouds or 5G edges. 3GPP SA1 studies and standardizes Cyber-Physical Control service requirements in R16 and R17, technical solutions of which are R15 and R16 URLLC/IIOT/TSN. However, "AI/ML operation offloading" requires very high uplink transmission rate and extremely low end-to-end return delay of "sensing-decision-control". However, the ms-level return delay not only requires terminals and base stations to support Ultra Reliable Low Latency Communications (URLLC), but also requires ubiquitous Mobile Edge Computing (MEC) deployment, which is extremely challenging in the future 5G network deployment. Then 99.9999% of delay requires complete network coverage, which cannot be realized in 5G millimeter wave band. Therefore, local AI/ML operation of the terminal is necessary. Finally, "AI/ML operation offloading" may also bring privacy protection risks, and uploading local data of many terminals to network devices may violate privacy protection regulations and users' wishes.

A feasible method is that the terminal and the network device cooperate to complete the AI/ML operation, that is, "AI/ML operation splitting". In related technologies, used AI/ML operation splitting is all static splitting, that is, it is fixed about which part is calculated by a terminal side and which part is calculated by the network device.

However, according to the fixed splitting mode, the AI/ML processing resources of the terminal may not meet requirements of originally determined AI operation splitting in some cases, while in some other cases, the waste of AI processing resources or radio resources will be caused.

Therefore, in related technologies, problems that requirements are not met and resources are wasted when the terminal performs the AI/ML operations locally exist in the related technology.

Aiming at the above-mentioned problems, no effective solutions have been proposed at present.

### Summary

Embodiments of the present invention provide an artificial intelligence operation processing method, an apparatus, a system, a terminal, and a network device, so as to at least solve technical problems that requirements are not met and resources are wasted when the terminal performs AI/ML operations locally in the related technology.

According to one aspect of the embodiment of the present invention, an artificial intelligence operation processing method is provided, including: receiving, by a terminal, indication information sent by a network device, wherein the indication information is used for indicating information about an Artificial Intelligence/Machine Learning (AI/ML) task performed by the terminal.

Optionally, the method further includes: performing, by the terminal, part or all of operations in the AI/ML task according to the indication information.

Optionally, the indication information is used for indicating at least one of the followings: an AI/ML model used by the terminal to perform the AI/ML task; a parameter set of an AI/ML model used by the terminal to perform the AI/ML task; or part or all of operations performed by the terminal in the AI/ML task.

Optionally, the indication information is used for indicating part or all of operations performed by the terminal in the AI/ML task, which includes: the indication information is used for indicating part or all of AI/ML acts performed by the terminal.

Optionally, the indication information is used for indicating part or all of AI/ML acts performed by the terminal, which includes: the indication information includes a ratio between acts performed by the network device and the terminal in the AI/ML task.

Optionally, the indication information is used for indicating part or all of operations performed by the terminal in the AI/ML task, which includes: the indication information includes a serial number of the AI/ML operation to be performed by the terminal in the AI/ML task.

Optionally, the method further includes: sending, by the terminal, at least one piece of the following information to the network device for generating the indication information by the network device: a computing power of the terminal for performing the AI/ML task, a storage space of the terminal for performing the AI/ML task, a battery resource of the terminal for performing the AI/ML task, or a communication requirement of the terminal for performing the AI/ML task.

Optionally, the indication information sent by the network device is received by receiving at least one piece of the following information: Downlink Control Information (DCI), a Medium Access Control Control Element (MAC CE), high layer configuration information, or application layer control information.

Optionally, the AI/ML model is a neural network-based model.

According to another aspect of the embodiment of the present invention, an artificial intelligence operation processing method is also provided, including: determining, by a network device, information about an Artificial Intelligence/Machine Learning (AI/ML) task to be performed by a terminal; and sending, by the network device, indication information to the terminal, wherein the indication information is used for indicating the information about the AI/ML task performed by the terminal.

Optionally, the network device determines the information about the AI/ML task to be performed by the terminal, which includes: acquiring at least one piece of the following information: a computing power of the terminal for performing the AI/ML task, a storage space of the terminal for performing the AI/ML task, a battery resource of the terminal for performing the AI/ML task, or a communication requirement of the terminal for performing the AI/ML task; and, determining, by the network device, the information about the AI/ML task to be performed by the terminal according to the acquired information.

Optionally, the indication information is used for indicating at least one of the followings: an AI/ML model used by the terminal to perform the AI/ML task; a parameter set of an AI/ML model used by the terminal to perform the AI/ML task; or part or all of operations performed by a terminal in the AI/ML task.

Optionally, the indication information is used for indicating part or all of operations performed by the terminal in the AI/ML task, which includes: the indication information is used for indicating part or all of AI/ML acts performed by the terminal.

Optionally, the indication information is used for indicating part or all of AI/ML acts performed by the terminal, which includes: the indication information includes a ratio between acts performed by the network device and the terminal in the AI/ML task.

Optionally, the indication information is used for indicating part or all of operations performed by the terminal in the AI/ML task, which includes: the indication information includes a serial number of the AI/ML operation required to be performed by the terminal in the AI/ML task.

Optionally, after sending the indication information to the terminal, it is further included that: performing, by the network device, an AI/ML operation that matches the AI/ML operation performed by the terminal.

Optionally, the network device sends the indication information to the terminal by carrying the indication information on at least one piece of the following information: Downlink Control Information (DCI), a Medium Access Control Control Element (MAC CE), high layer configuration information, or application layer control information.

Optionally, the AI/ML model is a neural network-based model.

According to a further aspect of the embodiment of the present invention, an artificial intelligence operation processing method is also provided, including: determining, by a network device, information about an Artificial Intelligence/Machine Learning (AI/ML) task to be performed by a terminal; sending, by the network device, indication information to the terminal, wherein the indication information is used for indicating the information about the AI/ML task performed by the terminal; performing, by the terminal, part or all of AI/ML operations in the AI/ML task according to the indication information; and performing, by the network device, an AI/ML operation that matches the AI/ML operation performed by the terminal.

Optionally, the indication information is used for indicating at least one of the followings: an AI/ML model used by the terminal to perform the AI/ML task; a parameter set of an AI/ML model used by the terminal to perform the AI/ML task; or part or all of operations performed by the terminal in the AI/ML task.

Optionally, the indication information is used for indicating part or all of operations performed by the terminal in the AI/ML task, which includes: the indication information is used for indicating part or all of AI/ML acts performed by the terminal.

Optionally, the method further includes: sending, by the terminal, at least one piece of the following information to the network device for determining, by the network device, information about the AI/ML task to be performed by the terminal: a computing power of the terminal for performing the AI/ML task, a storage space of the terminal for performing the AI/ML task, a battery resource of the terminal for performing the AI/ML task, or a communication requirement of the terminal for performing the AI/ML task.

According to one aspect of the embodiment of the present invention, an artificial intelligence operation processing apparatus is provided, including: a receiving module, configured to receive, by a terminal, indication information sent by a network device, wherein the indication information is used for indicating information about an Artificial Intelligence/Machine Learning (AI/ML) task performed by the terminal.

According to another aspect of the embodiment of the present invention, an artificial intelligence operation processing apparatus is provided, including: a determining module, configured to determine, by a network device, information about an Artificial Intelligence/Machine Learning (AI/ML) task to be performed by a terminal; and a sending module, configured to send, by the network device, indication information to the terminal, wherein the indication information is used for indicating the information about the AI/ML task performed by the terminal.

According to a further aspect of the embodiment of the present invention, an artificial intelligence operation processing system is provided, including: a network device and a terminal, wherein the network device is configured to determine information about an Artificial Intelligence/Machine Learning (AI/ML) task to be performed by the terminal, and send indication information to the terminal, wherein the indication information is used for indicating the information about the AI/ML task performed by the terminal; the terminal is configured to perform part or all of AI/ML operations in the AI/ML task according to the indication information; and the network device is further configured to perform an AI/ML operation that matches the AI/ML operation performed by the terminal.

According to one aspect of the embodiment of the present invention, a terminal is provided, including: a computer readable storage medium and at least one processor, wherein the computer readable storage medium stores at least one computer execution instruction, and the at least one processor is controlled to execute any of the above artificial intelligence operation processing methods when the at least one computer execution instruction is run.

According to another aspect of an embodiment of the present invention, a network device is provided, including: a computer readable storage medium and at least one processor, wherein the computer readable storage medium stores at least one computer execution instruction, and the at least one processor is controlled to execute any of the above artificial intelligence operation processing methods when the at least one computer execution instruction is run.

According to a further aspect of the embodiment of the present invention, a storage medium is provided, which stores at least one computer execution instruction, wherein a processor is controlled to execute any of the above artificial intelligence operation processing methods when the at least one computer execution instruction is run.

In the embodiment of the present invention, by means of receiving, by the terminal, the indication information sent by the network device to indicate the information about the AI/ML task performed by the terminal, by dynamically indicating the information about the AI/ML task performed by the terminal, for example, dynamically indicating the AI/ML operations performed by the terminal, the purpose that the terminal can perform the adaptive AI/ML task according to an actual situation of the terminal is achieved, thereby realizing technical effects of optimal AI/ML task splitting between the network device and the terminal and then optimizing AI/ML operation efficiency, and then solving the technical problems that the requirements are not met and the resources are wasted when the terminal performs the AI/ML operations locally in the related technology.

### Brief Description of Drawings

The drawings described herein are used for providing further understanding of the present invention and form a part of the present application. Illustrative embodiments of the present invention and the description thereof are used for explaining the present invention and do not construct an improper limitation on the present invention. In the accompanying drawings:
FIG. 1 is a schematic diagram of a transmission of an AI/ML model on 5G and 6G networks in related technologies.
FIG. 2 is a flowchart of a first artificial intelligence operation processing method according to an embodiment of the present invention.
FIG. 3 is a flowchart of a second artificial intelligence operation processing method according to an embodiment of the present invention.
FIG. 4 is a flowchart of a third artificial intelligence operation processing method according to an embodiment of the present invention.
FIG. 5 is a schematic diagram of "AI/ML operation offloading" and "AI/ML operation splitting" provided according to a preferred embodiment of the present invention.
FIG. 6 is a schematic diagram of dynamically adjusting, by a terminal, a running AI/ML model according to an indication of a network device, which is provided according to a preferred embodiment of the present invention.
FIG. 7 is a schematic diagram of dynamically adjusting, by a terminal, a responsible AI/ML act according to an indication of a network device, which is provided according to a preferred embodiment of the present invention.
FIG. 8 is a schematic diagram of dynamically adjusting, by a terminal, a responsible AI/ML section according to an indication of a network device, which is provided according to a preferred embodiment of the present invention.
FIG. 9 is a schematic diagram of dynamically adjusting, by a terminal, an AI/ML operation splitting mode according to an indication of a network device, which is provided according to a preferred embodiment of the present invention.
FIG. 10 is a schematic diagram of indicating, by a network device according to varying of an AI/ML computing power of a terminal, the terminal to switch an AI/ML model, which is provided according to a preferred embodiment of the present invention.
FIG. 11 is a schematic diagram of indicating, by a network device according to varying of a realizable communication rate, a terminal to switch an AI/ML model, which is provided according to a preferred embodiment of the present invention.
FIG. 12 is a schematic diagram of indicating, by a network device according to varying of an AI/ML computing power of a terminal, the terminal to adjust a responsible AI/ML act, which is provided according to a preferred embodiment of the present invention.
FIG. 13 is a schematic diagram of indicating, by a network device according to varying of a realizable communication rate, a terminal to adjust a responsible AI/ML act, which is provided according to a preferred embodiment of the present invention.
FIG. 14 is a schematic diagram of indicating, by a network device according to varying of an AI/ML computing power of a terminal, the terminal to adjust a responsible AI/ML operation section, which is provided according to a preferred embodiment of the present invention.
FIG. 15 is a schematic diagram of indicating, by a network device according to varying of a realizable communication rate, a terminal to adjust a responsible AI/ML operation section, which is provided according to a preferred embodiment of the present invention.
FIG. 16 is a schematic diagram of indicating, by a network device according to varying of an AI/ML computing power of a terminal, the terminal to switch an AI/ML operation splitting mode, which is provided according to a preferred embodiment of the present invention.
FIG. 17 is a schematic diagram of indicating, by a network device according to varying of a realizable communication rate, a terminal to switch an AI/ML operation splitting mode, which is provided according to a preferred embodiment of the present invention.
FIG. 18 is a block diagram of a structure of a first artificial intelligence operation processing apparatus which is provided according to an embodiment of the present invention.
FIG. 19 is a block diagram of a structure of a second artificial intelligence operation processing apparatus which is provided according to an embodiment of the present invention.
FIG. 20 is a block diagram of a structure of an artificial intelligence operation processing system which is provided according to an embodiment of the present invention.

### Detailed Description

In order to make one skilled person in the art better understand solutions of the present invention, technical solutions in embodiments of the present invention will be described clearly and completely below with reference to the drawings in the embodiments of the present invention. Apparently, the described embodiments are only a part, but not all, of the embodiments of the present invention. Based on the embodiments of the present invention, all other embodiments obtained by one ordinary skilled in the art without paying an inventive effort shall belong to the protection scope of the present invention.

It should be noted that, terms "first" and "second" and the like in the description and claims of the present invention and the above drawings are used for distinguishing similar objects and not necessarily used for describing a specific sequence or a chronological order. It should be understood that data used in this mode may be interchanged in an appropriate case, so that the embodiments of the present invention described herein can be implemented in an order other than those illustrated or described herein. Furthermore, terms "including" and "having" and any variations thereof are intended to cover non-exclusive inclusion, for example, a process, a method, a system, a product, or a device that includes a series of acts or units need not be limited to those acts or units clearly listed, but may include other acts or units that are not clearly listed or inherent to these processes, methods, products, or devices.

According to an embodiment of the present invention, a method embodiment of an artificial intelligence operation processing method is provided, it should be noted that acts illustrated in the flowchart of the drawings may be performed in a computer system such as a set of computer executable instructions, and while a logical order is shown in the flowchart, the acts shown or described may be performed in a different order than herein, in some certain cases.

FIG. 2 is a flowchart of a first artificial intelligence operation processing method according to an embodiment of the present invention. As shown in FIG. 2, the method includes an act S202.

In the act S202, a terminal receives indication information sent by a network device, wherein the indication information is used for indicating information about an Artificial Intelligence/Machine Learning (AI/ML) task performed by the terminal.

Through the above act, by means of receiving, by the terminal, the indication information sent by the network device to indicate the information about the AI/ML task performed by the terminal, by dynamically indicating the information about the AI/ML task performed by the terminal, for example, dynamically indicating the AI/ML operations performed by the terminal, the purpose that the terminal can perform the adaptive AI/ML task according to an actual situation of the terminal is achieved, thereby realizing technical effects of optimal AI/ML task splitting between the network device and the terminal, and then optimizing AI/ML operation efficiency, and then solving the technical problems that the requirements are not met and the resources are wasted when the terminal performs the AI/ML operations locally in the related technology.

As an optional embodiment, an execution subject of the above act may be a terminal, which may be a mobile terminal, for example, some 5G mobile terminals such as smart phones, smart cars, drones, or robots, etc.

As an optional embodiment, the terminal performs part or all of operations in the AI/ML task according to the indication information. By dynamically indicating the information about the AI/ML task performed by the terminal, for example, dynamically indicating part or all of the AI/ML operations performed by the terminal, the purpose that the terminal can perform part or all of the adaptive AI/ML operations according to the actual situation of the terminal is achieved, thereby realizing technical effects of optimal AI/ML operation splitting between the network device and the terminal and then optimizing the AI/ML operation efficiency.

As an optional embodiment, information indicating the AI/ML task performed by the terminal may include multiple types of information, for example, the indication information is used for indicating at least one of the followings: an AI/ML model used by the terminal to perform the AI/ML task; a parameter set of an AI/ML model used by the terminal to perform the AI/ML task; or part or all of operations performed by the terminal in the AI/ML task. The followings are described separately.

As an optional embodiment, the AI/ML model used by the terminal to perform the AI/ML task may be indicated, in a case that the terminal does not determine the used AI/ML model itself (e.g. what type of model to use, or a model capable of achieving what function to use, etc., such as an image recognition model, or a speech recognition model). For example, the AI/ML model mentioned in the embodiment of the present invention may be a neural network-based model. It should be noted that the terminal uses different AI/ML models, which needs the terminal to have different requirements. For example, different AI/ML models require different computing powers of the terminal for AI/ML, or different AI/ML models require different transmission requirements between the terminal and a network, etc.

As an optional embodiment, in a case that the terminal determines the used AI/ML model, that is, the case that both the network device and the terminal know the AI/ML model used by the terminal when running the AI/ML operations locally, but are not sure about what the parameter set used by the terminal under the AI/ML model is, at this time, the network device may directly indicate the parameter set of the AI/ML model used by the terminal to perform the AI/ML task, thus achieving a purpose of indicating the terminal. For the same AI/ML model, different parameter sets are used for achieving different goals, that is, for completing different AI/ML tasks.

As an optional embodiment, the indication information is used for indicating part or all of the operations performed by the terminal in the AI/ML task, which may include: the indication information is used for indicating part or all of AI/ML acts performed by the terminal.

For example, when the indication information is used for indicating part or all of the AI/ML acts performed by the terminal, the AI/ML acts performed by the terminal may be indicated according to a sequence of the acts in a case that there is a sequence of performing part or all of the AI/ML acts in the AI/ML task; in a case that there is no sequence of performing part or all of the AI/ML acts in the AI/ML task, the terminal may be indicated to perform the various acts that are not in sequence. For example, in a case that part or all of the AI/ML acts in the AI/ML task include acts 1, 2, 3,... in sequence, the terminal may be indicated to perform acts 1, 2, 4, etc. When part or all of the AI/ML acts in the AI/ML task include acts 1, 2, 3,... that are not in sequence, the terminal may be indicated to perform acts 3, 2, etc., that have no sequence.

As an optional embodiment, indicating part or all of the operations performed by the terminal in the AI/ML task may be by a variety of modes, for example, indicating may be in a mode of explicitly indicating the corresponding part of the operation, for example, in a mode of indicating which acts used as described above; or part or all of the operations performed by the terminal in the AI/ML task may be indicated by a ratio between the acts performed by the network device and the terminal in the AI/ML task. That is, the ratio between the acts performed by the network device and the terminal in the AI/ML task is included in the indication information. For example, it is indicated that the splitting ratio between the network device and the terminal is 8: 2, that is, it is indicated that the part performed by terminal in the AI/ML task accounts for 2/10 of all acts; it is indicated that the splitting ratio between the network device and the terminal is 7: 3, that is, it is indicated that the part performed by terminal in the AI/ML task accounts for 3/10 of all acts. That is, it is noted that using this mode is simple and can effectively improve efficiency of the indication.

As an optional embodiment, the indication information may indicate part or all of the AI/ML operations performed by the terminal in a variety of modes. A relatively simple and relatively fast indication mode may be that the indication information includes a serial number of the AI/ML operation required to be performed by the terminal in the AI/ML task, that is, the indication information indicates the AI/ML operation performed by the terminal by indicating the serial number. An example is described below.

In a case that the indication information indicates the AI/ML model used by the terminal to perform the AI/ML task, the indication information indicates a serial number of the AI/ML model used by the terminal to perform the AI/ML task in preset AI/ML models with n1 serial numbers; in a case that the indication information indicates the parameter set of the AI/ML model used by the terminal to perform the AI/ML task, the indication information indicates a serial number of the parameter set of the AI/ML model used by the terminal to perform the AI/ML task in preset parameter sets with n2 serial numbers; in a case that the indication information indicates part or all of the operations performed by the terminal in the AI/ML task, the indication information indicates a serial number of the operations performed by the terminal in the AI/ML task in preset operations with n3 serial numbers. For example, in a case that the indication information indicates the terminal to perform the AI/ML act in the AI/ML task, the indication information indicates a serial number of the AI/ML act performed by the terminal in preset AI/ML acts with m serial numbers, wherein the AI/ML acts with m serial numbers are used for complete one AI/ML task; and values of n1, n2, n3, and m are integers greater than or equal to 1.

As an optional embodiment, the method provided in the embodiment of the present invention further includes: at least one piece of the following information is sent to the network device for generating the indication information by the network device: a computing power of the terminal for performing the AI/ML task, a storage space of the terminal for performing the AI/ML task, a battery resource of the terminal for performing the AI/ML task, or a communication requirement of the terminal for performing the AI/ML task. Herein, the computing power of the terminal for performing the AI/ML task refers to an allocated computing resource of the terminal for performing the AI/ML operation in the AI/ML task. The storage space of the terminal for performing the AI/ML task refers to an allocated storage resource of the terminal for performing the AI/ML operation. The battery resource of the terminal for performing the AI/ML task refers to a power consumption or an energy consumption of the terminal for the AI/ML operation. The communication requirement of the terminal for performing the AI/ML task refers to a required transmission rate, transmission delay, and transmission reliability requirement, etc., to the terminal for the AI/ML operation.

As an optional embodiment, when the indication information sent by the network device is received, the indication information may be carried in information sent by the network device to the terminal, and the indication information may be received by receiving the information. For example, the indication information sent by the network device may be received by receiving at least one piece of the following information: Downlink Control Information (DCI), a Media Access Control Control Element (MAC CE), high layer configuration information, or application layer control information. Herein, the above DCI is in a dedicated DCI Format, or generated with a dedicated Radio Network Temporary Identity (RNTI).

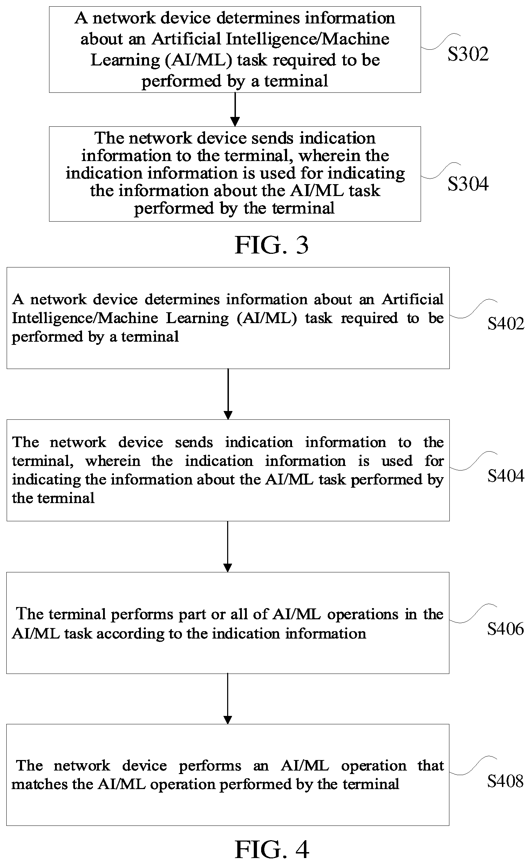

According to an embodiment of the present invention, a method embodiment of an artificial intelligence operation processing method is also provided. FIG. 3 is a flowchart of a second artificial intelligence operation processing method according to an embodiment of the present invention. As shown in FIG. 3, the method includes the following acts S302 and S304.

In the act S302, a network device determines information about an Artificial Intelligence/Machine Learning (AI/ML) task to be performed by a terminal.

In the act S304, the network device sends indication information to the terminal, wherein the indication information is used for indicating the information about the AI/ML task performed by the terminal.

Through the above acts, by means of indicating, by the indication information sent by the network device to the terminal, the information about the AI/ML task performed by the terminal, by dynamically indicating the information about the AI/ML task performed by the terminal, for example, dynamically indicating part or all of operations in the AI/ML task performed by the terminal, the purpose that the terminal can perform the adaptive AI/ML task according to the actual situation of the terminal is achieved, thereby realizing technical effects of optimal AI/ML operation splitting between the network device and the terminal and optimizing AI/ML operation efficiency, and then solving technical problems that requirements are not met and resources are wasted when the terminal performs the AI/ML operations locally in the related technology.

As an optional embodiment, an execution subject of the above acts may be a network device, for example, a server in which the network device realizes the above function, or a gateway, etc.

As an optional embodiment, the network device determines the information about the AI/ML task to be performed by the terminal, which includes: at least one piece of the following information is acquired: a computing power of the terminal for performing the AI/ML task, a storage space of the terminal for performing the AI/ML task, a battery resource of the terminal for performing the AI/ML task, or a communication requirement of the terminal for performing the AI/ML task; and the network device determines the information about the AI/ML task to be performed by the terminal according to the acquired information. Herein, the above mode of acquiring the information may be reporting the information by the terminal in a predetermined period, or sending, by the network device, an instruction to the terminal and reporting, by the terminal, the information to the network device after receiving the instruction.

As an optional embodiment, corresponding to the embodiment of the terminal side described above, the indication information is used for indicating at least one of the followings: an AI/ML model used by the terminal to perform the AI/ML task; a parameter set of an AI/ML model used by the terminal to perform the AI/ML task; or part or all of operations performed by the terminal in the AI/ML task.

Correspondingly, the indication information is used for indicating part or all of the operations performed by the terminal in the AI/ML task, which includes: the indication information is used for indicating part or all of AI/ML acts performed by the terminal.

Correspondingly, the indication information is used for indicating part or all of the AI/ML acts performed by the terminal, which includes: the indication information includes a ratio between acts performed by the network device and the terminal in the AI/ML task.

Correspondingly, the indication information is used for indicating part or all of the operations performed by the terminal in the AI/ML task, which includes: the indication information includes a serial number of the AI/ML operation required to be performed by the terminal in the AI/ML task.

As an optional embodiment, after the indication information is sent to the terminal, it is further included that: the network device performs an AI/ML operation that matches the AI/ML operation performed by the terminal. That is, the network device performs the AI/ML operation that matches the AI/ML operation performed by the terminal, which implements splitting of the AI/ML operations between the network device and the terminal. It should be noted that "matching" referred to herein may be that for one AI/ML task, a part of AI/ML operations of the AI/ML task are performed by the terminal, and the remaining part of the AI/ML task is performed by the network device.

Optionally, the network device may send the indication information to the terminal by carrying the indication information on at least one piece of the following information: Downlink Control Information (DCI), a Medium Access Control Control Element (MAC CE), high layer configuration information, or application layer control information.

According to an embodiment of the present invention, a method embodiment of an artificial intelligence operation processing method is also provided. FIG. 4 is a flowchart of a third artificial intelligence operation processing method according to an embodiment of the present invention. As shown in FIG. 4, the method includes the following acts S402 to S408.

In the act S402, a network device determines information about an Artificial Intelligence/Machine Learning (AI/ML) task to be performed by a terminal.

In the act S404, the network device sends indication information to the terminal, wherein the indication information is used for indicating the information about the AI/ML task performed by the terminal.

In act S406, the terminal performs part or all of AI/ML operations in the AI/ML task according to the indication information.

In act S408, the network device performs an AI/ML operation that matches the AI/ML operation performed by the terminal.

Through the above acts, by means of that after the network device determines the information about the AI/ML task performed by the terminal, the network device sends the indication information to the terminal to indicate the information about the AI/ML task performed by the terminal, by dynamically indicating the information about the AI/ML task performed by the terminal, for example, indicating part or all of the AI/ML operations in the AI/ML task performed by the terminal, a purpose that the terminal can perform the adaptive AI/ML operation according to the actual situation of the terminal is achieved, thereby realizing the technical effect of the optimal AI/ML operation splitting between the network device and the terminal, optimizing the AI/ML operation efficiency, and then solving the technical problems that requirements are not met and resources are wasted when the terminal performs the AI/ML operations locally in the related technology.

As an optional embodiment, the indication information is used for indicating at least one of the followings: an AI/ML model used by the terminal to perform the AI/ML task; a parameter set of an AI/ML model used by the terminal to perform the AI/ML task; or part or all of operations performed by the terminal in the AI/ML task.

As an optional embodiment, the indication information is used for indicating part or all of operations performed by the terminal in the AI/ML task, which includes: the indication information is used for indicating part or all of AI/ML acts performed by the terminal.

As an optional embodiment, the above method may further include: the terminal sends at least one piece of the following information to the network device for determining, by the network device, the information about the AI/ML task to be performed by the terminal: a computing power of the terminal for performing the AI/ML task, a storage space of the terminal for performing the AI/ML task, a battery resource of the terminal for performing the AI/ML task, and a communication requirement of the terminal for performing the AI/ML task.

Preferred embodiments of the present invention are described below with respect to the above-mentioned embodiments and optional embodiments.

In related technologies, a mobile terminal is in a changing wireless channel environment, and it itself will keep moving its position, so problems such as a reduced transmission rate, a data packet loss, an uncertain transmission delay, and the like, exist. Chip processing resources and storage resources, etc. that the mobile terminal can allocate for AI/ML computing are different and change at any time. According to a fixed splitting mode, AI/ML computing and processing resources and a wireless transmission rate of the terminal may not meet requirements of original AI/ML operation splitting in some certain cases, while in some other cases, waste of AI/ML processing resources or radio resources is also caused.

For the above problems existed in the AI/ML operation splitting of a mobile network in related technologies, in an embodiment of the present invention, a technical solution of how to dynamically adjust the AI/ML model and resource splitting between the terminal and the network device is provided. In particular, an AI/ML operation splitting method (corresponding to the AI/ML operation processing method referred to in the above-mentioned and preferred embodiments) for a mobile communication system is provided, in which based on the situation of the terminal (for example, an available computing power, a wireless transmission rate, or other factors), the network device determines an AI/ML operation division between the network device and the terminal, including: dynamically indicating an AI/ML model that the terminal should use; dynamically indicating a parameter set of a model used by the terminal; and dynamically indicating a part, that the terminal performs, in an AI/ML task. Herein, dynamically indicating a part, that the terminal performs in an AI/ML task may include: indicating AI/ML acts performed by the terminal; and indicating the terminal to perform a parallel splitting part. Herein, the AI/ML acts may be in an execution sequence, and parallel splitting parts may represent parts not in an execution sequence. Illustration is made by taking simply dynamically indicating the AI/ML model used by the terminal, or by dynamically indicating which AI/ML acts the terminal performs as an example in the following preferred embodiments.

The AI/ML operation splitting method for participation by the mobile terminal may include: a terminal receives indication information from the network device in a wireless communication system (wherein the indication information may be scheduling information for the network device to perform a scheduling function on the terminal), wherein the indication information is used for indicating an AI/ML model used by the terminal, and/or to indicate which AI/ML acts the terminal performs. Here are the examples.

In method 1, in preset n (n=1, 2, ..., N) AI/ML models, the indication information indicates a serial number of one of the models.

In method 2, assume that one AI/ML task may be splitted into M AI/ML acts, the indication information indicates m AI/ML acts thereof which are performed by the terminal.

Herein, values of n and m are integers greater than or equal to 1, and the indication information may be carried in control information (such as DCI), a MAC CE, high layer configuration signaling (such as RRC signaling), or application layer control information. Herein, the DCI may be in a dedicated DCI Format or be generated with a dedicated RNTI.

In a case that computing power allocation of the mobile terminal is constantly changing and a wireless channel is also constantly changing, the above method may ensure optimal splitting of the AI/ML operations between the network device and the terminal, optimizing efficiency of the AI/ML operations.

Taking dynamically indicating the AI/ML model used by the terminal to perform the AI/ML task, dynamically indicating which AI/ML acts the terminal performs (the following acts refer to acts in sequence), dynamically indicating which parts of the AI/ML operations the terminal performs (for example, it can be considered as acts that are not in sequence), and dynamically indicating the AI/ML operation splitting mode used between the network device and the terminal as examples, the preferred embodiments of the present invention will be illustrated in detail below. It should be noted that the network device dynamically indicates other information about the AI/ML task of the terminal, for example, dynamically indicating a parameter set of the AI/ML model used by the terminal to perform the AI/ML task, or the like, which can also be applied to following preferred embodiments of the present invention.

### First preferred embodiment: a basic process of AI/ML operation splitting

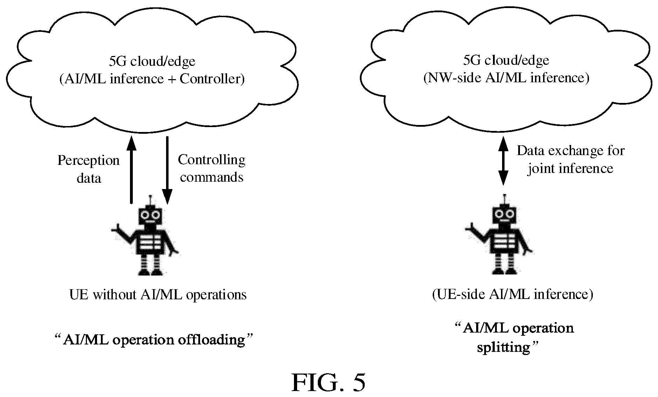

Due to the limited computing resources, storage resources and battery capacity of the mobile terminal, it is necessary to implement a part of AI/ML computing in the network device. FIG. 5 is a schematic diagram of "AI/ML operation offloading" and "AI/ML operation splitting" provided according to a preferred embodiment of the present invention. As shown in FIG. 5, the AI/ML operation splitting thereof includes: the terminal primarily runs relatively low complexity calculation sensitive to delay and privacy protection, and the network device primarily runs relatively high complexity calculation insensitive to delay and privacy.

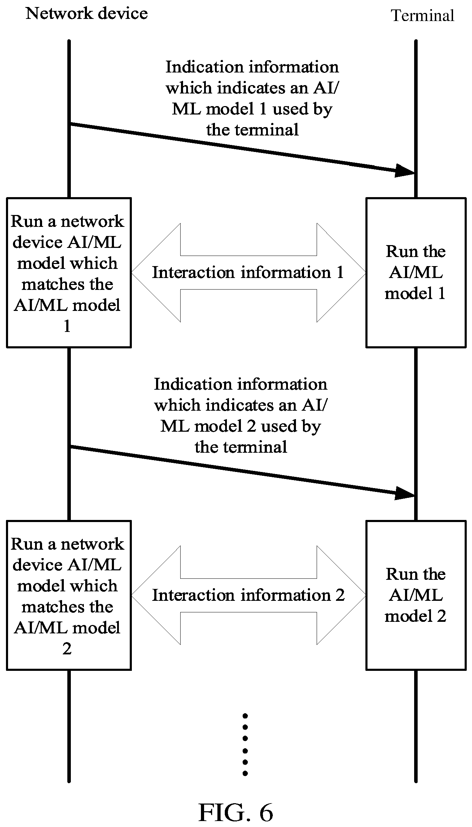

Since the mobile terminal is running another application program at the same time, computing resources, storage resources, and a battery capacity that can be used for a certain specific AI/ML operation may change at any time. Meanwhile the instability of the wireless channel environment between the terminal and the network device is considered, so the AI/ML model running on the terminal need to be determined by considering complexity of the AI/ML model that the terminal can run and a communication transmission rate that can be realized. FIG. 6 is a schematic diagram of dynamically adjusting, by a terminal, a running AI/ML model according to an indication of a network device, which is provided according to a preferred embodiment of the present invention. As shown in FIG. 6, the network device dynamically schedules the AI/ML model that the terminal runs. According to indication information of the network device, the terminal determines the AI/ML model that the terminal runs, and meanwhile the network device runs an AI/ML model that adapts to the AI/ML model that the terminal runs, forming an AI operation splitting mode. By new indication information, the network device may also switch the AI/ML model that the terminal runs, and meanwhile the network device switches to another AI/ML model adapted to the AI/ML model that the terminal runs, entering another AI/ML operation splitting mode.

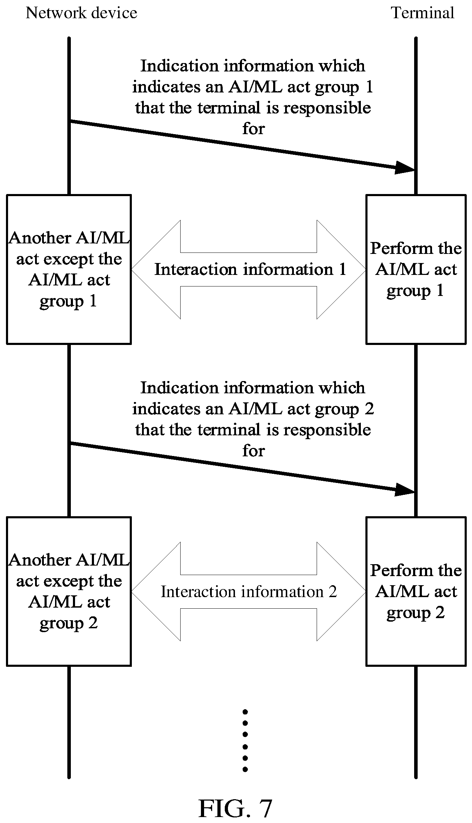

In another preferred embodiment, considering the complexity of the AI/ML model that the terminal can run and the communication transmission rate that can be realized, which AI/ML acts of the AI/ML task are performed on the terminal and which AI/ML acts are performed by the network device are determined. FIG. 7 is a schematic diagram of dynamically adjusting, by a terminal, a responsible AI/ML act according to an indication of a network device, which is provided according to a preferred embodiment of the present invention. As shown in FIG. 7, the network device dynamically schedules an AI/ML act that the terminal runs. According to indication information of the network device, the terminal determines an AI/ML act that the terminal is responsible for performing, and meanwhile the network device performs another AI/ML act, forming an AI/ML operation splitting mode. By new indication information, the network device may also adjust the AI/ML act that the terminal is responsible for performing, and meanwhile the network device instead performs a remaining AI/ML act, entering another AI/ML operation splitting mode.

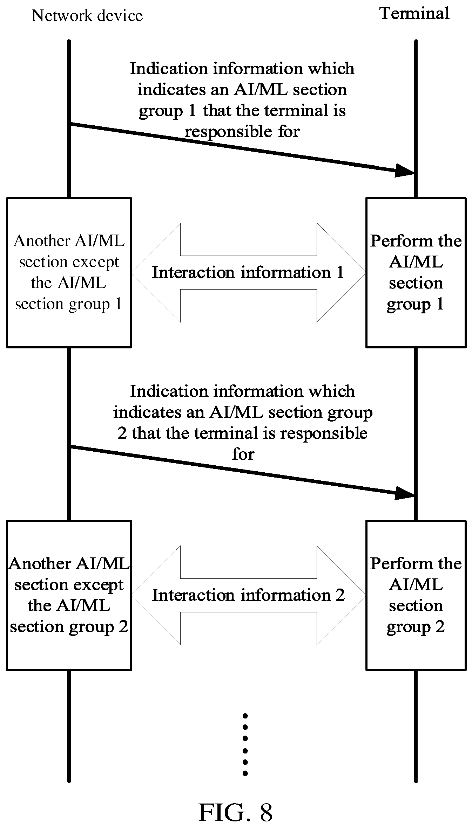

In another preferred embodiment, that the AI/ML operations performed by the terminal and the network device are not in sequence is considered, that is, the AI/ML task to be completed is implemented by completing various parts. Therefore, according to the complexity of the AI/ML model that can be run and the communication transmission rate that can be realized, the network device may determine which AI/ML sections of the AI/ML task are performed by the terminal and which AI/ML sections are performed by the network device. FIG. 8 is a schematic diagram of dynamically adjusting, by a terminal, a responsible AI/ML section according to an indication of a network device, which is provided according to a preferred embodiment of the present invention. As shown in FIG. 8, the network device dynamically schedules the AI/ML section that the terminal runs. According to indication information of the network device, the terminal determines the AI/ML section that the terminal is responsible for performing, and meanwhile the network device performs another AI/ML section, forming an AI/ML operation splitting mode. By new indication information, the network device may also adjust the AI/ML section that the terminal is responsible for performing, and meanwhile the network device instead performs a remaining AI/ML section, entering another AI/ML operation splitting mode.

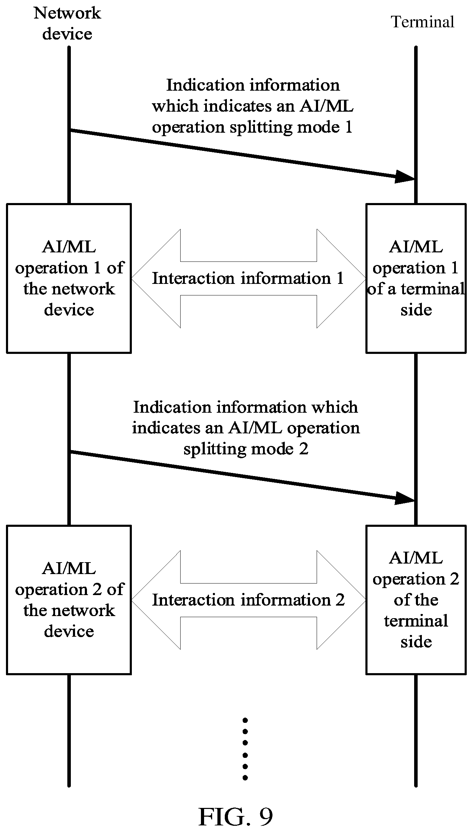

In another preferred embodiment, according to the complexity of the AI/ML model that can be run and the communication transmission rate that can be realized, the network device may also determines the AI/ML operation splitting mode by which the terminal and the network device perform the AI/ML tasks. For example, the network device may determine a ratio of the network device to the terminal for performing the AI/ML tasks, for example, the ratio of the network device to the terminal for performing the AI/ML tasks is 8: 2, or the ratio of the network device to the terminal for performing the AI/ML tasks is 7: 3, etc. FIG. 9 is a schematic diagram of dynamically adjusting, by a terminal, an AI/ML operation splitting mode according to an indication of a network device, which is provided according to a preferred embodiment of the present invention. As shown in FIG. 9, the network device dynamically schedules the AI/ML operation splitting mode of the network device and the terminal for performing the AI/ML tasks. According to indication information of the network device, the terminal determines AI/ML operation that the terminal is responsible for performing, and meanwhile the network device performs another AI/ML operation, forming an AI/ML operation splitting mode. By new indication information, the network device may also adjust the AI/ML operation splitting mode, and determines the AI/ML operation that the terminal is responsible for performing, and meanwhile the network device instead performs a remaining AI/ML operation, entering another AI/ML operation splitting mode.

### Second preferred embodiment: implementation of AI/ML operation re-splitting by switching an AI/ML model

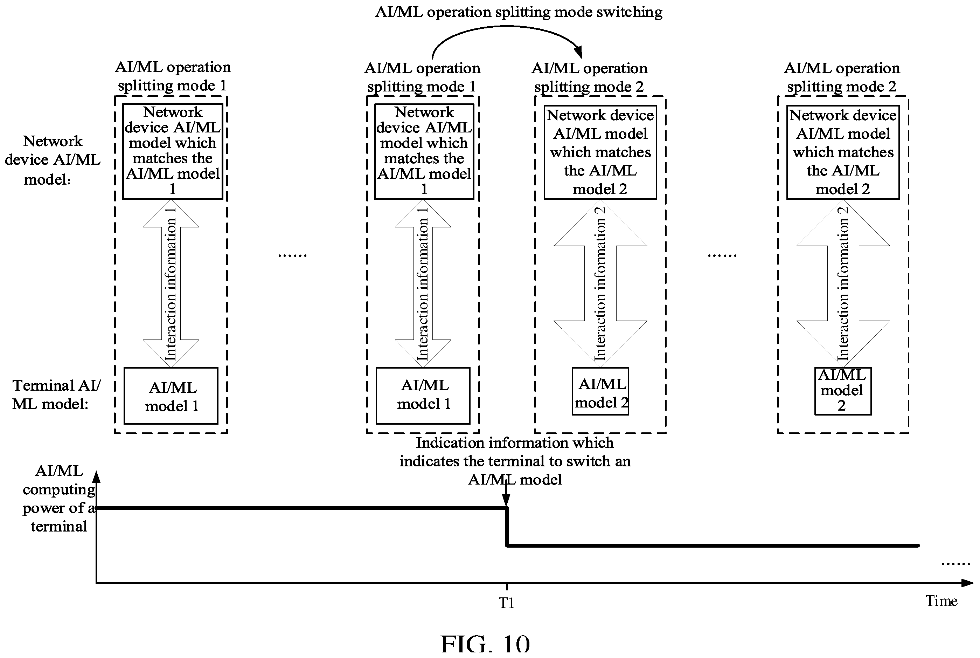

FIG. 10 is a schematic diagram of indicating, by a network device according to varying of an AI/ML computing power of a terminal, the terminal to switch an AI/ML model, which is provided according to a preferred embodiment of the present invention. As shown in FIG. 10, assuming that the terminal has a relatively high AI/ML computing power (i.e., the computing power referred to above) available for this AI/ML task in a first period of time and may run a relatively complex AI/ML model 1, then the network device may run a network device AI/ML model matching the AI/ML model 1, and these two models constitute an AI/ML operation splitting mode 1. At a time point T1, the AI/ML computing power that the terminal can allocate to this AI/ML task is reduced, and the terminal cannot run the AI/ML model 1 anymore, but the terminal may run an AI/ML model 2 with relatively low complexity. Therefore, by indication information, the network device may indicate the terminal to switch to the AI/ML model 2, and meanwhile the network device also switches to a network device AI/ML model which matches the AI/ML model 2, forming a new AI/ML operation splitting mode 2.

According to the above switching mechanism of the terminal AI/ML model indicated by the network device, an AI/ML operation splitting mode which adapts to the AI/ML computing resources of the terminal may be realized, thereby ensuring the reliability of the terminal AI/ML operation and meanwhile making full use of the AI/ML computing power of the terminal and the network device as much as possible.

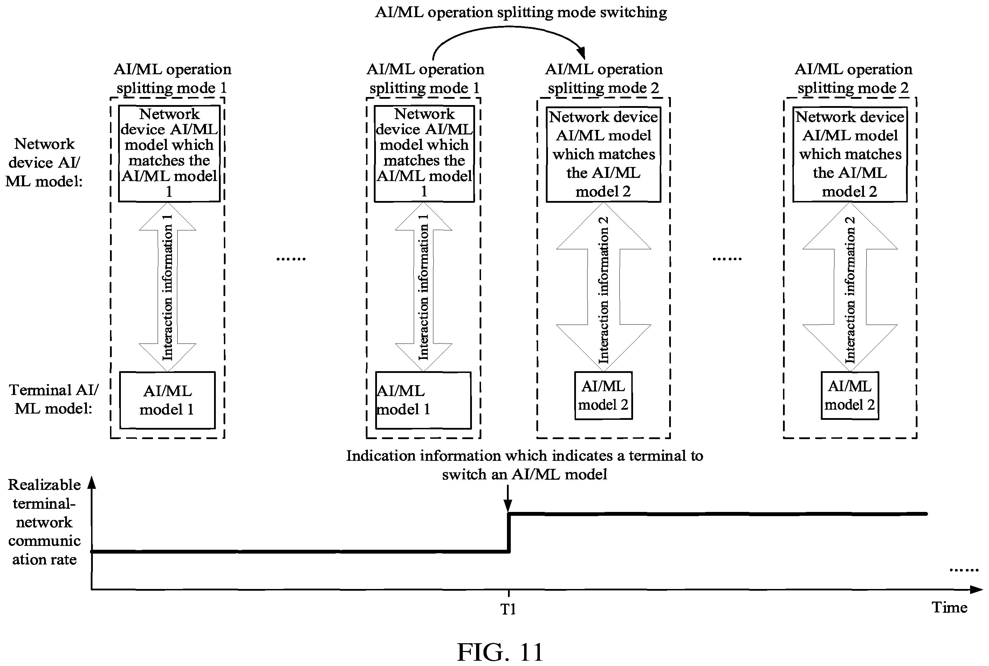

FIG. 11 is a schematic diagram of indicating, by a network device according to varying of a realizable communication rate, a terminal to switch an AI/ML model, which is provided according to a preferred embodiment of the present invention. As shown in FIG. 11, assuming that a realizable data rate of a wireless communication channel between the terminal and the network device is relatively low in a first period of time, and only an AI/ML model 1 which is relatively complex and requires a relatively low communication rate can be run, then the network device runs a network device AI/ML model that matches the AI/ML Model 1, and these two models constitute an AI/ML operation splitting mode 1. At a time point T1, the data rate that can be realized between the terminal and the network device is improved, and the terminal may instead run an AI/ML model 2 with relatively low complexity and a relatively high communication rate requirement. Therefore, by indication information, the network device may indicate the terminal to switch to the AI/ML model 2, and meanwhile the network device also switch to a network device AI/ML model which matches the AI/ML model 2, forming an AI/ML operation splitting mode 2.

According to the above switching mechanism of the terminal AI/ML model indicated by the network device, an AI/ML operation splitting mode which adapts to a communication transmitting capability may be realized, thereby ensuring reliability of interaction of wireless communication information and meanwhile making full use of the AI/ML computing power of the terminal and the network device as much as possible.

### Third preferred embodiment: implementation of AI/ML operation re-splitting by adjusting division of AI/ML acts

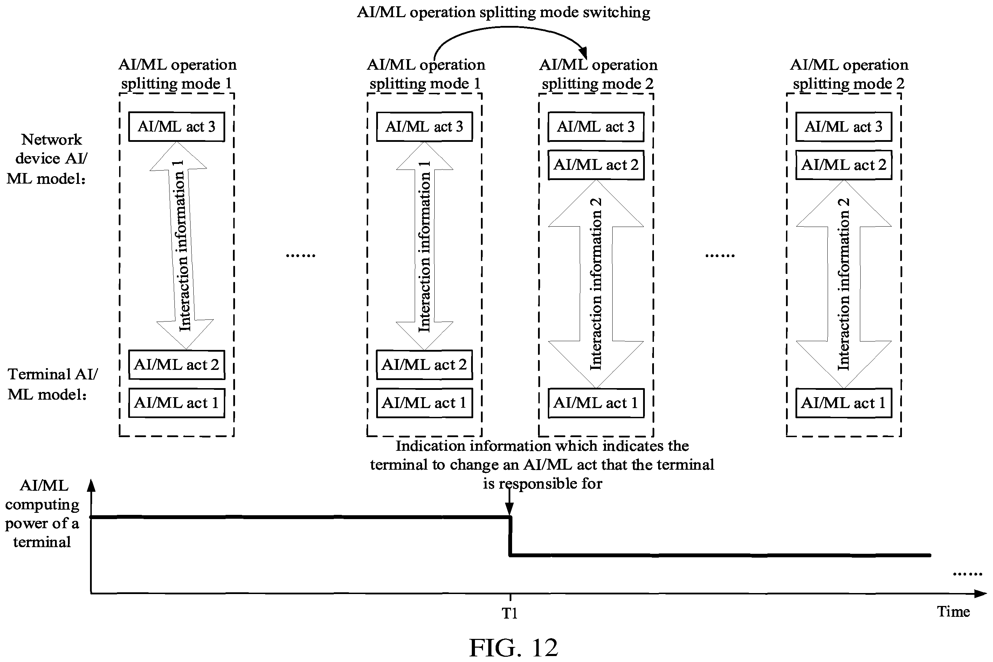

FIG. 12 is a schematic diagram of indicating, by a network device according to varying of an AI/ML computing power of a terminal, the terminal to adjust a responsible AI/ML act, which is provided according to a preferred embodiment of the present invention. As shown in FIG. 12, assuming that the AI/ML computing power of the terminal available to this AI/ML task is relatively high in a first period of time, the terminal may run AI/ML acts 1 and 2, while the network device is responsible for running an AI/ML act 3. This division constitutes an AI/ML operation splitting mode 1. At a time point T1, the AI/ML computing power that the terminal can allocate to this AI/ML task is reduced, such that the terminal cannot perform the AI/ML acts 1 and 2 anymore, but may still perform the AI/ML act 1. Therefore, by indication information, the network device may indicate the terminal to perform only the AI/ML act 1, and meanwhile the network device may also switch to perform the AI/ML acts 2 and 3, forming a new AI/ML operation splitting mode 2.

According to the adjusting mechanism of the AI/ML act division indicated by the network device, an AI/ML act division which adapts to the AI/ML computing resources of the terminal may be realized, thereby ensuring reliability of the terminal AI/ML operation, and meanwhile making full use of the AI/ML computing power of the terminal and the network device as much as possible.

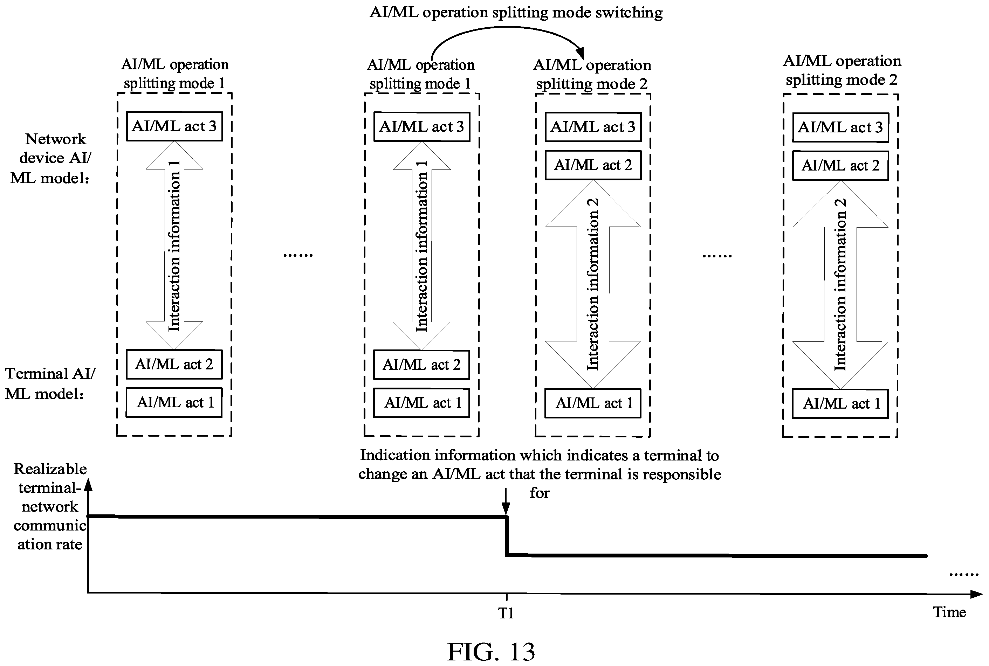

FIG. 13 is a schematic diagram of indicating, by a network device according to varying of a realizable communication rate, a terminal to adjust a responsible AI/ML act, which is provided according to a preferred embodiment of the present invention. As shown in FIG. 13, assuming that a realizable data rate of a wireless communication channel between the terminal and the network device is relatively low in a first period of time, an AI/ML operation splitting mode 1 which requires a relatively low communication data rate needs to be used, that is, the terminal runs AI/ML acts 1 and 2, while the network device is responsible for running an AI/ML act 3. At a time point T1, the data rate that can be realized between the terminal and the network device is improved, and the terminal may instead perform only the AI/ML act 1 with relatively low complexity but a high communication rate requirement. Therefore, by indication information, the network device may indicate the terminal to adjust to perform only the AI/ML act 1, and meanwhile the network device also adjusts to perform the AI/ML acts 2 and 3, forming an AI/ML operation splitting mode 2.

According to the above adjusting mechanism of the terminal AI/ML act indicated by the network device, an AI/ML operation splitting mode which adapts to a communication transmitting capability may be realized, thereby ensuring reliability of interaction of wireless communication information, and meanwhile making full use of the AI/ML computing power of the terminal and the network device as much as possible.

### Fourth preferred embodiment: implementation of AI/ML operation re-splitting by adjusting division of AI/ML operation sections

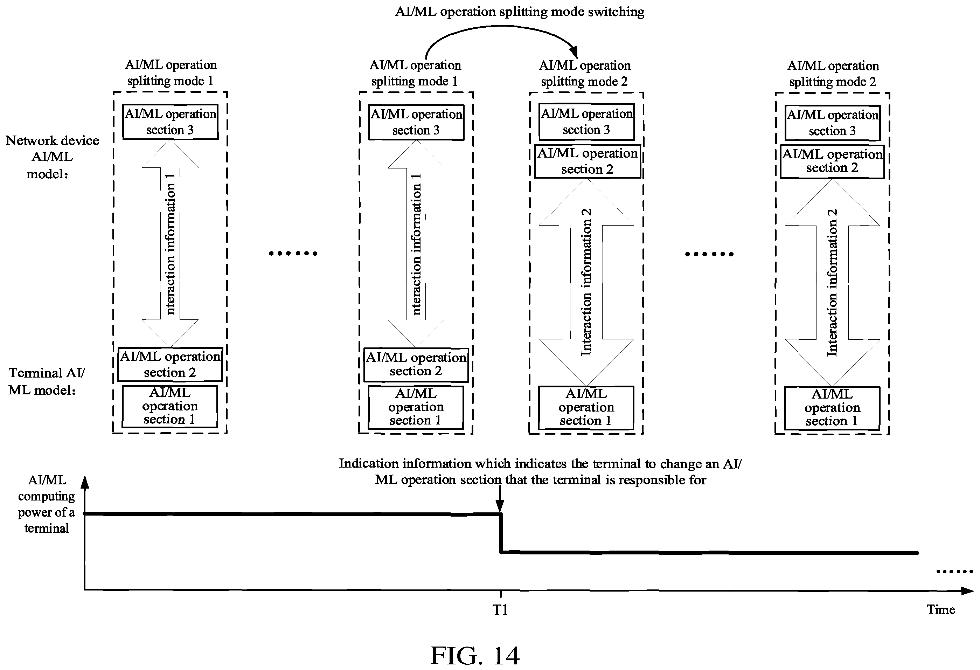

FIG. 14 is a schematic diagram of indicating, by a network device according to varying of an AI/ML computing power of a terminal, the terminal to adjust a responsible AI/ML operation section, which is provided according to a preferred embodiment of the present invention. As shown in FIG. 14, assuming that the AI/ML computing power of the terminal available to this AI/ML task is relatively high in a first period of time, the terminal may run AI/ML operation sections 1 and 2, while the network device is responsible for running an AI/ML operation section 3. This division constitutes an AI/ML operation splitting mode 1. At a time point T1, the AI/ML computing power that the terminal can allocate to this AI/ML task is reduced, such that the terminal cannot perform the AI/ML operation sections 1 and 2 anymore, but may still perform the AI/ML operation section 1. Therefore, by indication information, the network device may indicate the terminal to perform only the AI/ML operation section 1, and meanwhile the network device may also switch to perform the AI/ML operation sections 2 and 3, forming a new AI/ML operation splitting mode 2.

According to the above adjusting mechanism of the AI/ML operation section division indicated by the network device, an AI/ML operation section division which adapts to the AI/ML computing resources of the terminal may be realized, thereby ensuring reliability of the terminal AI/ML operation, and meanwhile making full use of the AI/ML computing power of the terminal and the network device as much as possible.

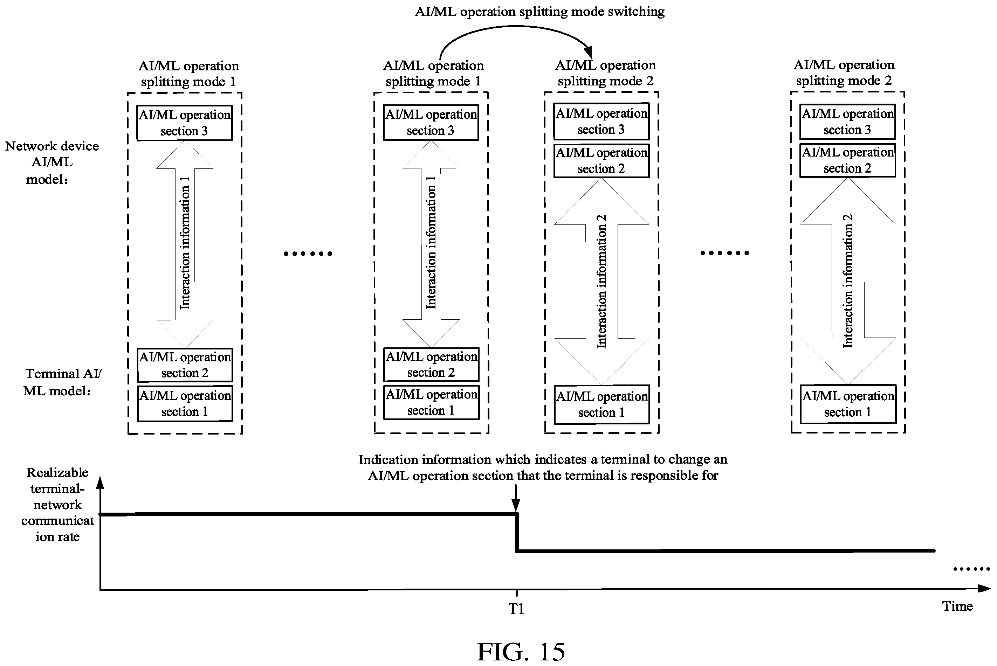

FIG. 15 is a schematic diagram of indicating, by a network device according to varying of a realizable communication rate, a terminal to adjust a responsible AI/ML operation section, which is provided according to a preferred embodiment of the present invention. As shown in FIG. 15, assuming that a realizable data rate of a wireless communication channel between the terminal and the network device is relatively low in a first period of time, an AI/ML operation splitting mode 1 which requires a relatively low communication data rate needs to be used, that is, the terminal runs AI/ML operation sections 1 and 2, while the network device is responsible for running an AI/ML operation section 3. At a time point T1, the data rate that can be realized between the terminal and the network device is improved, and the terminal may instead perform only the AI/ML operation section 1 with relatively low complexity and a high communication rate requirement. Thus, by indication information, the network device may indicate the terminal to adjust to perform only the AI/ML operation section 1, and meanwhile the network device is also adjusted to perform the AI/ML operation sections 2 and 3, forming an AI/ML operation splitting mode 2.

According to the above adjusting mechanism of the terminal AI/ML operation section division indicated by the network device, an AI/ML operation splitting mode which adapts to a communication transmitting capability may be realized, thereby ensuring reliability of interaction of wireless communication information, and meanwhile making full use of the AI/ML computing power of the terminal and the network device as much as possible.

### Fifth preferred embodiment: implementation of AI/ML operation re-splitting by adjusting an AI/ML operation splitting mode

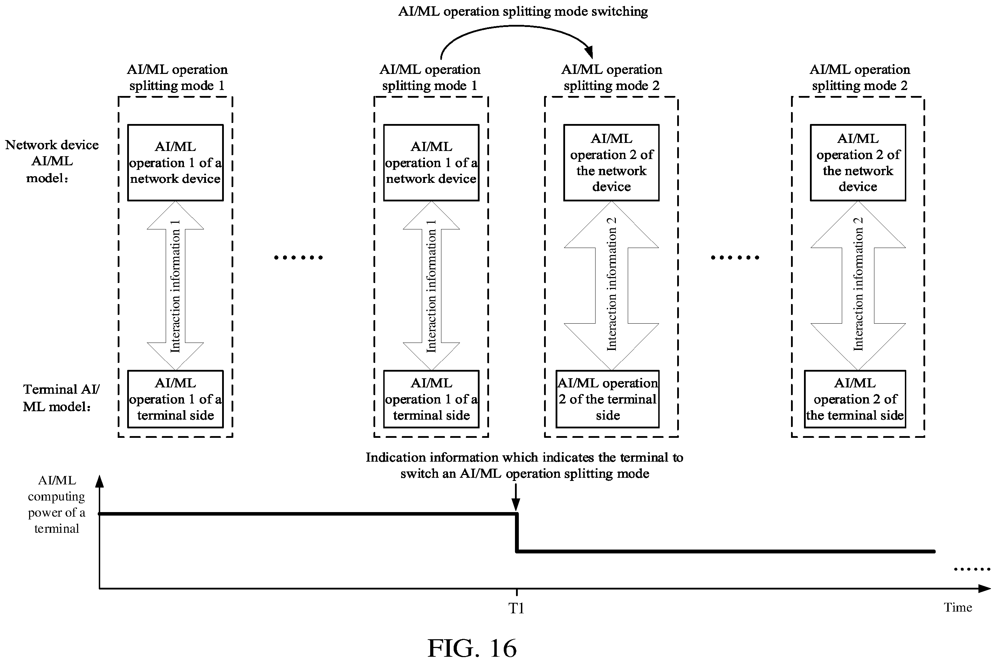

FIG. 16 is a schematic diagram of indicating, by a network device according to varying of an AI/ML computing power of a terminal, the terminal to switch an AI/ML operation splitting mode, which is provided according to a preferred embodiment of the present invention. As shown in FIG. 16, assuming that in a first period of time, the network device determines, according to the AI/ML computing power of the terminal which is available to this AI/ML task, that the network device and the terminal use a division mode of a splitting mode 1, in which the terminal performs an AI/ML operation 1, and the network device performs the AI/ML operation 1 that matches the terminal, and this division constitutes an AI/ML operation splitting mode 1. At a time point T1, the network device determines, according to the AI/ML computing power of the terminal which is available to this AI/ML task, that the network device and the terminal use a division mode of a splitting mode 2, in which the terminal performs an AI/ML operation 2, and the network device performs the AI/ML operation 2 that matches the terminal, and this division constitutes an AI/ML operation splitting mode 1. Therefore, by indication information, the network device may indicate the terminal to switch the AI/ML operation splitting mode, the terminal performs the AI/ML operation 2, and the network device performs the AI/ML operation 2 that matches the terminal, forming a new AI/ML operation splitting mode 2.

According to the above adjusting mechanism in which the network device indicates the terminal to switch the AI/ML operation splitting mode, an AI/ML operation splitting mode which adapts to the AI/ML computing resources of the terminal may be realized, thereby ensuring reliability of the terminal AI/ML operation, and meanwhile making full use of the AI/ML computing power of the terminal and the network device as much as possible.

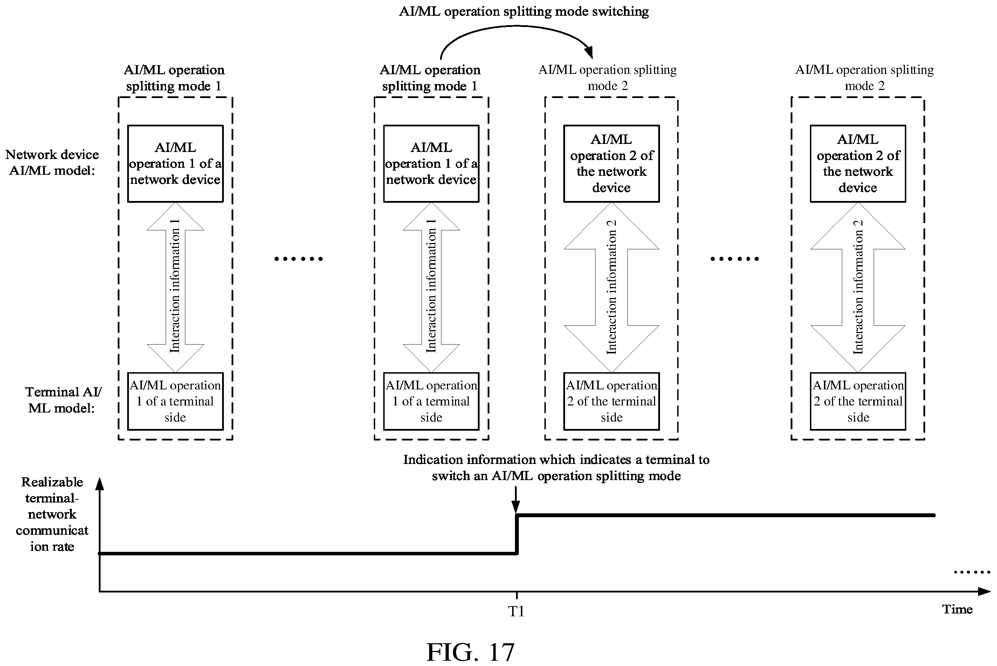

FIG. 17 is a schematic diagram of indicating, by a network device according to varying of a realizable communication rate, a terminal to switch an AI/ML operation splitting mode, which is provided according to a preferred embodiment of the present invention. As shown in FIG. 17, assuming that in a first period of time, the network device determines that the network device and the terminal use a division mode of a splitting mode 1 according to a realizable network communication rate of the terminal which is available to this AI/ML task, the terminal performs an AI/ML operation 1, the network device performs the AI/ML operation 1 that matches the terminal, and this division constitutes an AI/ML operation splitting mode 1. At a time point T1, the network device determines, according to a realizable network communication rate of the terminal which is available to the AI/ML task, that the network device and the terminal use a division mode of a splitting mode 2, in which the terminal performs an AI/ML operation 2, and the network device performs the AI/ML operation 2 that matches the terminal, and this division constitutes the AI/ML operation splitting mode 1. Therefore, by indication information, the network device may indicate the terminal to switch the AI/ML operation splitting mode, the terminal performs the AI/ML operation 2, and the network device performs the AI/ML operation 2 which matches the terminal, forming a new AI/ML operation splitting mode 2.

According to the above adjusting mechanism of switching the AI/ML operation splitting mode by the terminal indicated by the network device, an AI/ML operation splitting mode which adapts to a communication transmitting capability may be realized, thereby ensuring reliability of interaction of wireless communication information, and meanwhile making full use of the AI/ML computing power of the terminal and the network device as much as possible.

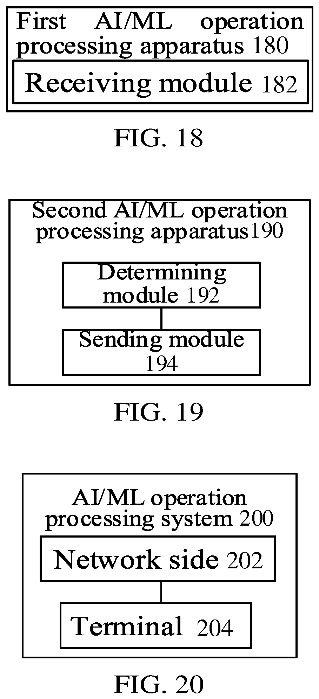

In a preferred embodiment of the present invention, an artificial intelligence operation processing apparatus is provided. FIG. 18 is a block diagram of a structure of a first artificial intelligence operation processing apparatus which is provided according to an embodiment of the present invention. As shown in FIG. 18, the first AI/ML operation processing apparatus 180 includes: a receiving module 182, which is described below.

The receiving module 182 is configured to receive, by a terminal, indication information sent by a network device, wherein the indication information is used for indicating information about an Artificial Intelligence/Machine Learning (AI/ML) task performed by the terminal.

In a preferred embodiment of the present invention, an artificial intelligence operation processing apparatus is also provided. FIG. 19 is a block diagram of a structure of a second artificial intelligence operation processing apparatus which is provided according to an embodiment of the present invention. As shown in FIG. 19, the second AI/ML operation processing apparatus 190 includes: a determining module 192 and a sending module 194, which are described below.

The determining module 192 is configured to determine, by a network device, information about an Artificial Intelligence/Machine Learning (AI/ML) task to be performed by a terminal; and the sending module 194 is connected to the determining module 192 and is configured to send, by the network device, indication information to the terminal, wherein the indication information is used for indicating the information about the AI/ML task performed by the terminal.

In a preferred embodiment of the present invention, an artificial intelligence operation processing system is also provided. FIG. 20 is a block diagram of a structure of an artificial intelligence operation processing system which is provided according to an embodiment of the present invention. As shown in FIG. 20, the AI/ML operation processing system 200 includes: a network device 202 and a terminal 204, which are described below respectively.

The network device 202 is configured to determine information about an Artificial Intelligence/Machine Learning (AI/ML) task to be performed by the terminal and send indication information to the terminal, wherein the indication information is used for indicating the information about the AI/ML task performed by the terminal; the terminal 204 communicates with the network device 202, and is configured to perform part or all of AI/ML operations in the AI/ML task according to the indication information; and the network device 202 is further configured to perform AI/ML operations that match the AI/ML operations performed by the terminal.

In a preferred embodiment of the present invention, a terminal is also provided, including: a computer readable storage medium and at least one processor, wherein the computer readable storage medium stores at least one computer execution instruction, and the at least one processor is controlled to execute any of the above artificial intelligence operation processing methods when the at least one computer execution instruction is run.

In a preferred embodiment of the present invention, a network device is also provided, including: a computer readable storage medium and at least one processor, wherein the computer readable storage medium stores at least one computer execution instruction, and the at least one processor is controlled to execute any of the above artificial intelligence operation processing methods when the at least one computer execution instruction is run.

In a preferred embodiment of the present invention, a storage medium is also provided, which stores at least one computer execution instruction, wherein a processor is controlled to execute any of the above artificial intelligence operation processing methods when the at least one computer execution instruction is run.

Embodiment 1. An artificial intelligence operation processing method, comprising:
receiving, by a terminal, indication information sent by a network device, wherein the indication information is used for indicating information about an Artificial Intelligence/Machine Learning (AI/ML) task performed by the terminal.

Embodiment 2. The method according to embodiment 1, further comprising:
performing, by the terminal, part or all of operations in the AI/ML task according to the indication information.

Embodiment 3. The method according to embodiment 1, wherein the indication information is used for indicating at least one of the followings:
an AI/ML model used by the terminal to perform the AI/ML task;
a parameter set of the AI/ML model used by the terminal to perform the AI/ML task; or
part or all of operations performed by the terminal in the AI/ML task.

Embodiment 4. The method according to embodiment 3, wherein the indication information is used for indicating part or all of operations performed by the terminal in the AI/ML task, which comprises:
the indication information is used for indicating part or all of AI/ML acts performed by the terminal.

Embodiment 5. The method according to embodiment 4, wherein the indication information is used for indicating part or all of AI/ML acts performed by the terminal, which comprises:
a ratio between acts performed by the network device and the terminal in the AI/ML task is included in the indication information.

Embodiment 6. The method according to embodiment 3, wherein the indication information is used for indicating part or all of operations performed by the terminal in the AI/ML task, which comprises:
the indication information comprises a serial number of an AI/ML operation required to be performed by the terminal in the AI/ML task.

Embodiment 7. The method according to embodiment 1, further comprising:
sending, by the terminal, at least one piece of following information to the network device for generating the indication information by the network device: a computing power of the terminal for performing the AI/ML task, a storage space of the terminal for performing the AI/ML task, a battery resource of the terminal for performing the AI/ML task, or a communication requirement of the terminal for performing the AI/ML task.

Embodiment 8. The method according to any one of embodiments 1 to 7, wherein the indication information sent by the network device is received by receiving at least one piece of following information:
Downlink Control Information (DCI), a Medium Access Control Control Element (MAC CE), high layer configuration information, or application layer control information.

Embodiment 9. The method according to any one of embodiments 2 to 7, wherein, the AI/ML model is a neural network-based model.

Embodiment 10. An artificial intelligence operation processing method, comprising:
determining, by a network device, information about an Artificial Intelligence/Machine Learning (AI/ML) task to be performed by a terminal; and
sending, by the network device, indication information to the terminal, wherein the indication information is used for indicating the information about the AI/ML task performed by the terminal.

Embodiment 11. The method according to embodiment 10, wherein determining, by a network device, information about an AI/ML task to be performed by a terminal, comprises:
acquiring at least one piece of following information: a computing power of the terminal for performing the AI/ML task, a storage space of the terminal for performing the AI/ML task, a battery resource of the terminal for performing the AI/ML task, or a communication requirement of the terminal for performing the AI/ML task; and
determining, by the network device according to the acquired information, the information about the AI/ML task to be performed by the terminal.

Embodiment 12. The method according to embodiment 10, wherein the indication information is used for indicating at least one of the followings:
an AI/ML model used by the terminal to perform the AI/ML task;
a parameter set of the AI/ML model used by the terminal to perform the AI/ML task; or
part or all of operations performed by the terminal in the AI/ML task.

Embodiment 13. The method according to embodiment 12, wherein the indication information is used for indicating part or all of operations performed by the terminal in the AI/ML task, comprises:
the indication information is used for indicating part or all of AI/ML acts performed by the terminal.

Embodiment 14. The method according to embodiment 13, wherein the indication information is used for indicating part or all of AI/ML acts performed by the terminal, comprises:
a ratio between acts performed by the network device and the terminal in the AI/ML task is included in the indication information.

Embodiment 15. The method according to embodiment 10, wherein the indication information is used for indicating part or all of operations performed by the terminal in the AI/ML task, which comprises:
the indication information comprises a serial number of an AI/ML operation required to be performed by the terminal in the AI/ML task.

Embodiment 16. The method according to embodiment 10, wherein after sending the indication information to the terminal, further comprising:
performing, by the network device, an AI/ML operation that matches an AI/ML operation performed by the terminal.

Embodiment 17. The method according to any one of embodiments 10 to 16, wherein the network device sends the indication information to the terminal by carrying the indication information in at least one piece of following information:
Downlink control information (DCI), a Medium Access Control Control Element (MAC CE), high layer configuration information, or application layer control information.

Embodiment 18. The method according to any one of embodiments 12 to 16, wherein the AI/ML model is a neural network-based model.

Embodiment 19. An artificial intelligence operation processing method, comprising:
determining, by a network device, information about an Artificial Intelligence/Machine Learning (AI/ML) task to be performed by a terminal;
sending, by the network device, indication information to the terminal, wherein the indication information is used for indicating the information about the AI/ML task performed by the terminal;
performing, by the terminal, part or all of AI/ML operations in the AI/ML task according to the indication information; and
performing, by the network device, an AI/ML operation that matches the AI/ML operation performed by the terminal.

Embodiment 20. The method according to embodiment 19, wherein the indication information is used for indicating at least one of the followings:
an AI/ML model used by the terminal to perform the AI/ML task;
a parameter set of the AI/ML model used by the terminal to perform the AI/ML task; or
part or all of operations performed by the terminal in the AI/ML task.

Embodiment 21. The method according to embodiment 20, wherein the indication information is used for indicating part or all of operations performed by the terminal in the AI/ML task, which comprises:
the indication information is used for indicating part or all of AI/ML acts performed by the terminal.

Embodiment 22. The method according to any one of embodiments 19 to 21, further comprising:
sending, by the terminal, at least one piece of following information to the network device for determining, by the network device, the information about the AI/ML task to be performed by the terminal: a computing power of the terminal for performing the AI/ML task, a storage space of the terminal for performing the AI/ML task, a battery resource of the terminal for performing the AI/ML task, or a communication requirement of the terminal for performing the AI/ML task.

Embodiment 23. An artificial intelligence operation processing apparatus, comprising:
a receiving module, configured to receive, by a terminal, indication information sent by a network device, wherein the indication information is used for indicating information about an Artificial Intelligence/Machine Learning (AI/ML) task performed by the terminal.

Embodiment 24. An artificial intelligence operation processing apparatus, comprising:
a determining module, configured to determine, by a network device, information about an Artificial Intelligence/Machine Learning (AI/ML) task to be performed by a terminal; and
a sending module, configured to send, by the network device, indication information to the terminal, wherein the indication information is used for indicating the information about the AI/ML task performed by the terminal.

Embodiment 25. An artificial intelligence operation processing system, comprising a network device and a terminal, wherein
the network device is configured to determine information about an Artificial Intelligence/Machine Learning (AI/ML) task to be performed by the terminal, and send indication information to the terminal, wherein the indication information is used for indicating the information about the AI/ML task performed by the terminal;
the terminal is configured to perform part or all of AI/ML operations in the AI/ML task according to the indication information; and
the network device is further configured to perform an AI/ML operation that matches an AI/ML operation performed by the terminal.

Embodiment 26. A terminal, comprising a computer readable storage medium and at least one processor, wherein the computer readable storage medium stores at least one computer execution instruction, and the at least one processor is controlled to execute the artificial intelligence operation processing method of any one of embodiments 1 to 9 when the at least one computer execution instruction is run.

Embodiment 27. A network device, comprising a computer readable storage medium and at least one processor, wherein the computer readable storage medium stores at least one computer execution instruction, and the at least one processor is controlled to execute the artificial intelligence operation processing method of any one of embodiments 10 to 18 when the at least one computer execution instruction is run.

Embodiment 28. A storage medium, storing at least one computer executable instruction, wherein a processor is controlled to execute the artificial intelligence operation processing method of any one of embodiments 1 to 22 when the at least one computer executable instruction is run.

The above-mentioned serial numbers of the embodiments of the present invention are only for description, and do not represent superiority and inferiority of the embodiments.

In the above embodiments of the present invention, the description of each embodiment has its own emphasis. A part which is not described in detail in a certain embodiment may refer to related descriptions in other embodiments.

In several embodiments provided by the present application, it should be understood that the disclosed technical content may be implemented in another mode. Herein, the apparatus embodiments described above are only illustrative, for example, the splitting of the units may be logical function splitting, and there may be another splitting mode in an actual implementation. For example, multiple units or components may be combined or integrated into another system, or some features may be ignored or not executed. At the other point, mutual coupling or direct coupling or a communication connection shown or discussed may be indirect coupling or communication connection through some interfaces, units, or modules, and may be in an electrical form or another form.

The unit described as a separate component may or may not be physically separated, and a component shown as a unit may or may not be a physical unit, i.e., it may be located in one place or may be distributed across multiple units. Part or all of the units thereof may be selected according to an actual requirement to achieve the purpose of the solution of the present embodiment.

In addition, various functional units in various embodiments of the present invention may be integrated in one processing unit, or various units may be physically present separately, or two or more units may be integrated in one unit. The above integrated unit may be implemented in a form of hardware, or may be implemented in a form of a software function unit.

The integrated unit may be stored in one computer readable storage medium if implemented in the form of the software functional unit and sold or used as a separate product. Based on such understanding, the technical solution of the present invention, in essence, or the part contributing to the prior art, or the all or part of the technical solution, may be embodied in a form of a software product, wherein the computer software product is stored in one storage medium, and includes a number of instructions for enabling one computer device (which may be a personal computer, a server, or a network device) to perform all or part of the acts of the methods described in various embodiments of the present invention. And the aforementioned storage medium includes: various media which may store program codes such as a U disk, a Read-Only Memory (ROM), a Random Access Memory (RAM), a mobile hard disk, a magnetic disk, or an optical disk, etc.

The above description is only preferred embodiments of the present invention. It should be pointed out that, for those ordinarily skilled in the art, without departing from the principle of the present invention, various improvements and modifications can be made, and these improvements and modifications should also be regarded as the protection scope of the present invention.

## Claims

1. An artificial intelligence operation processing method, comprising:
receiving, by a terminal, indication information sent by a network device, wherein the indication information is used for indicating information about an Artificial Intelligence/Machine Learning, AI/ML, task performed by the terminal.

2. The method according to claim 1, further comprising:
performing, by the terminal, part or all of operations in the AI/ML task according to the indication information.

3. The method according to claim 1, wherein the indication information is used for indicating at least one of the followings:
an AI/ML model used by the terminal to perform the AI/ML task;
a parameter set of the AI/ML model used by the terminal to perform the AI/ML task; or
part or all of operations performed by the terminal in the AI/ML task.

4. The method according to claim 3, wherein the indication information is used for indicating part or all of operations performed by the terminal in the AI/ML task, which comprises:
the indication information is used for indicating part or all of AI/ML acts performed by the terminal.

5. The method according to claim 4, wherein the indication information is used for indicating part or all of AI/ML acts performed by the terminal, which comprises:
a ratio between acts performed by the network device and the terminal in the AI/ML task is included in the indication information.

6. The method according to claim 3, wherein the indication information is used for indicating part or all of operations performed by the terminal in the AI/ML task, which comprises:
the indication information comprises a serial number of an AI/ML operation required to be performed by the terminal in the AI/ML task.

7. The method according to claim 1, further comprising:
sending, by the terminal, at least one piece of following information to the network device for generating the indication information by the network device: a computing power of the terminal for performing the AI/ML task, a storage space of the terminal for performing the AI/ML task, a battery resource of the terminal for performing the AI/ML task, or a communication requirement of the terminal for performing the AI/ML task.

8. The method according to any one of claims 1 to 7, wherein the indication information sent by the network device is received by receiving at least one piece of following information:
Downlink Control Information, DCI, a Medium Access Control Control Element, MAC CE, high layer configuration information, or application layer control information.

9. The method according to any one of claims 2 to 7, wherein, the AI/ML model is a neural network-based model.

10. An artificial intelligence operation processing method, comprising:
determining (S302), by a network device, information about an Artificial Intelligence/Machine Learning, AI/ML, task to be performed by a terminal; and
sending (S304), by the network device, indication information to the terminal, wherein the indication information is used for indicating the information about the AI/ML task performed by the terminal.

11. The method according to claim 10, wherein determining, by a network device, information about an AI/ML task to be performed by a terminal, comprises:
acquiring at least one piece of following information: a computing power of the terminal for performing the AI/ML task, a storage space of the terminal for performing the AI/ML task, a battery resource of the terminal for performing the AI/ML task, or a communication requirement of the terminal for performing the AI/ML task; and
determining, by the network device according to the acquired information, the information about the AI/ML task to be performed by the terminal.

12. The method according to claim 10, wherein the indication information is used for indicating at least one of the followings:
an AI/ML model used by the terminal to perform the AI/ML task;
a parameter set of the AI/ML model used by the terminal to perform the AI/ML task; or
part or all of operations performed by the terminal in the AI/ML task.

13. The method according to claim 10, wherein the indication information is used for indicating part or all of operations performed by the terminal in the AI/ML task, which comprises:
the indication information comprises a serial number of an AI/ML operation required to be performed by the terminal in the AI/ML task.

14. An artificial intelligence operation processing apparatus, comprising:
a determining module (192), configured to determine, by a network device, information about an Artificial Intelligence/Machine Learning, AI/ML, task to be performed by a terminal; and
a sending module (194), configured to send, by the network device, indication information to the terminal, wherein the indication information is used for indicating the information about the AI/ML task performed by the terminal.

15. An artificial intelligence operation processing apparatus, comprising:
a receiving module (182), configured to receive, by a terminal, indication information sent by a network device, wherein the indication information is used for indicating information about an Artificial Intelligence/Machine Learning (AI/ML) task performed by the terminal.
